# EUROPÄISCHE PATENTSCHRIFT

(11) **EP 0 972 444 B1**
(45) Veröffentlichungstag und Bekanntmachung des Hinweises auf die Patenterteilung: **22.09.2004**
(21) Anmeldenummer: 99112516.2
(22) Anmeldetag: 01.07.1999
(51) Int. Cl.: A01K 63/04

(54) **Vorrichtung zur Oberflächenabsaugung eines Flüssigkeitsspiegels**
Device for surface suction removal of a water surface
Dispositif pour aspirer la surface d'un bassin d'eau

(30) Priorität: 13.07.1998 AT 47098 U
(43) Veröffentlichungstag der Anmeldung: 19.01.2000
(73) Patentinhaber: Held GmbH, 75050 Gemmingen (DE); Minnova Mineralien-Handelsgesellschaft m.b.H., 8501 Lieboch (AT)
(72) Erfinder: Klement, Arnold, Mag., 8501 Lieboch (AT)
(74) Vertreter: Müller, Hans, Dipl.-Ing.

(56) Entgegenhaltungen:
- EP-A- 0 380 421
- GB-A- 348 794
- US-A- 5 133 854
- US-A- 5 275 721

## Beschreibung

### TECHNISCHES GEBIET

Die Erfindung betrifft eine Vorrichtung zur Oberflächenabsaugung des Flüssigkeitsspiegels einer Schwimmanlage, insbesondere eines Schwimmteichs, mit einem Schwimmer und einem Schwimmer-Gehäuse, gegenüber welchem der Schwimmer vertikal verschiebbar ist und in das eine Saugleitung einmündet, gemäß dem Oberbegriff des Anspruchs 1.

### STAND DER TECHNIK

Bekannte Vorrichtungen dieser Art finden vielfach als sogenannte Einhänge-Skimmer zur Oberflächenabsaugung von freistehenden, kleineren Schwimmbecken ihre Anwendung. Diese werden einfach am Beckenrand eingehängt und bestehen im Wesentlichen aus einem Schwimmer-Gehäuse und einem Schwimmer, welcher über das Schwimmer-Gehäuse gestülpt und vertikal beweglich ist, wobei dieser sich aufgrund seines großen Auftriebs den Schwankungen des Beckenspiegels anpassen kann.

Der Nachteil dieser bekannten Vorrichtung besteht darin, dass für ihre Anbringung ein Beckenrand erforderlich ist, in den sie eingehängt werden können. Dadurch beschränkt sich ihre Anwendung auf Becken dieser Art.

### DARSTELLUNG DER ERFINDUNG

Aufgabe der Erfindung ist es, eine Vorrichtung zu schaffen, die eine sichere Befestigung mit geringem, technischen Aufwand ermöglicht und für den Schwimmbetrieb nicht störend wirkt.

Erfindungsgemäß wird dies durch die Merkmale des kennzeichnenden Teils des Anspruchs 1 erreicht.

Das Schwimmer-Gehäuse kann auf diese Weise ohne das Vorhandensein eines Beckenrandes auf richtiger Höhe angebracht werden, so dass der eingesetzte Schwimmer den Flüssigkeitsschwankungen frei folgen kann und die volle Funktionsfähigkeit des Skimmers gewährleistet ist. Das Befestigungselement kann vollständig im Bodensubstrat des Schwimmteichs eingebettet werden und ergibt daher für die Badenden beziehungsweise Schwimmenden keine störenden, wegstehenden Teile. Ferner ergibt sich dadurch auch eine optisch attraktive Gestaltung, da das Befestigungselement durch seine verdeckte Anbringung im Boden von außen nicht sichtbar wird.

Gemäß der Erfindung ist das Befestigungselement aus einem das Schwimmer-Gehäuse und den Schwimmer zumindest teilweise umgebenden Aufnahmeteil gebildet.

Auf diese Weise kann das Schwimmer-Gehäuse mit dem Aufnahmeteil in einer dafür geeigneten Tiefe des Schwimmteiches sicher fixiert und der Schwimmer eingesetzt werden. Das Aufnahmeteil kann dabei vollständig in den Boden des Gewässers eingebettet werden und wirkt daher für die Badenden beziehungsweise Schwimmenden nicht störend, wobei eine relativ geringe Einbautiefe erforderlich ist und so bei künstlichen Teichen die Abdichtfolie an der Anbringungsstelle nicht wesentlich tiefer unterhalb des Wasserspiegels als an den übrigen Stellen verlegt werden muss. Auch bei relativ geringem Eigengewicht des Aufnahmeteils ist eine sichere Verankerung der erfindungsgemäßen Vorrichtung möglich.

In weiterer Ausbildung der Erfindung kann das Aufnahmeteil zumindest eine Klebefläche aufweisen, mit der eine entsprechende Fläche des Schwimmer-Gehäuses verklebbar ist. Diese Form der Verbindung von Schwimmer-Gehäuse und Aufnahmeteil ist sehr rasch und mit geringem arbeitstechnischen Aufwand herstellbar, so dass unmittelbar nach der Anbringung des Aufnahmeteils auch das Schwimmer-Gehäuse befestigbar ist.

Für eine sehr wirkungsvolle und gut haltbare Verklebung kann gesorgt werden, indem gemäß einer weiteren Ausführungsform der Erfindung die Klebefläche - in Gebrauchslage gesehen - im Bereich der unteren Innenseite des Aufnahmeteils horizontal verlaufend angeordnet ist.

Der flanschartige Ansatz des Hohlzylinders kann sehr gut in den Untergrund eines Schwimmteiches aus Kies oder Schotter eingebettet und dadurch dort fixiert werden. Die hohlzylindrische Form ermöglicht eine völlig behinderungsfreie Beweglichkeit des Schwimmers.

Eine weitere Ausführungsform der Erfindung kann darin bestehen, dass die Klebefläche auf einem, in den Innenraum des Hohlzylinders ragenden konzentrischen, ringkreisförmigen Ansatz ausgebildet ist, der vorzugsweise fluchtend mit dem flanschartigen Ansatz verläuft.

Dadurch kann das Schwimmer-Gehäuse von oben her in den Hohlzylinder eingebracht und dort auf dem inneren Ansatz festgeklebt werden.

### KURZE BESCHREIBUNG DER ZEICHNUNG

Nachstehend wird die Erfindung anhand des in den Zeichnungen dargestellten Ausführungsbeispiels eingehend erläutert. Es zeigt dabei
- Fig. 1: einen Schrägriss eines Teils einer Ausführungsform der Erfindung;
- Fig. 2: einen Schnitt durch die Darstellung gemäß Fig. 1 und
- Fig. 3: einen Schnitt durch die Ausführungsform der Erfindung gemäß Fig. 1 in eingebautem Zustand.

### WEGE ZUM AUSFÜHREN DER ERFINDUNG

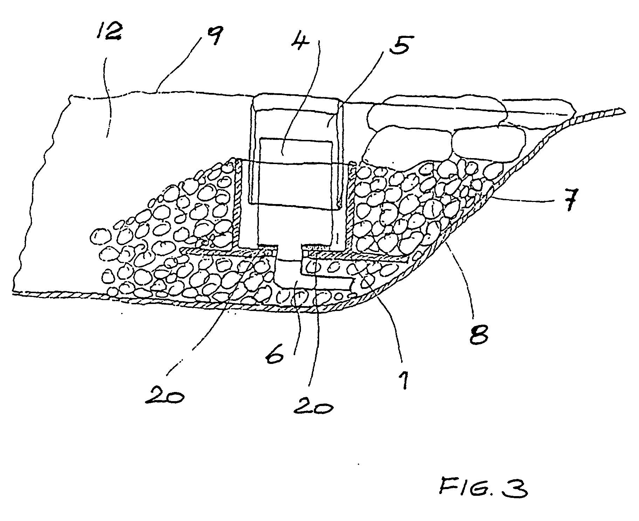

Eine in Fig. 3 dargestellte Vorrichtung zur Oberflächenabsaugung des Flüssigkeitsspiegels 9 einer Schwimmanlage, insbesondere eines Schwimmteiches 12, dient der Reinigung des Wassers von leichten, an der Oberfläche schwimmenden Teilchen, wie z.B. Blättern, Vogelfedern u.ä.. Zu diesem Zweck wird das Wasser an der Oberfläche ständig abgesaugt und dabei gefiltert. Das gefilterte Wasser kann dem Schwimmteich wieder zugeführt werden. Die in Fig. 3 nur zum Teil ersichtliche Schwimmanlage 12 ist ein künstlich angelegter Schwimm- oder Gartenteich oder ein ähnliches künstliches oder natürliches Gewässer, an deren Stelle aber im Rahmen der Erfindung jede andere Art eines geschlossenen Schwimmbeckens ausgebildet sein kann. Die Abdichtung der Schwimmanlage 12 gegen den Untergrund erfolgt gemäß Fig. 3 über eine Dichtfolie 7.

Um die Absaugung der Verunreinigungen unabhängig von Flüssigkeitsspiegelschwankungen ständig ander Oberfläche ausführen zu können, ist ein Schwimmer 5 vorgesehen, der relativ zu einem feststehenden Schwimmer-Gehäuse 4 verschiebbar ist und aufgrund seines Auftriebes immer auf dem Niveau der Flüssigkeitsoberfläche 9 gehalten ist. Am Boden des Schwimmer-Gehäuses 4 mündet eine Saugleitung 6 ein, die zu einer in Fig. 3 nicht dargestellten Absaugpumpe führt, welche im Betrieb ständig Wasser über die Saugleitung 6 ansaugt. Im Schwimmer-Gehäuse 4 sind nicht dargestellte, auswechselbare Filter-Kartuschen untergebracht, die die Schmutzteilchen zurückhalten.

Um Schwimmer-Gehäuse und Schwimmer in einem natürlichen oder künstlichen Teich, See o.ä. ohne aufwendige bauliche Maßnahmen störungsfrei betreiben zu können, ist erfindungsgemäß ein Element zur Befestigung 1 des Schwimmer-Gehäuses 4 im Boden- beziehungsweise Uferbereich der Schwimmanlage 12 vorgesehen, wobei das Befestigungselement 1 im Boden beziehungsweise Ufer 8 der Schwimmanlage 12 verankerbar ist.

Weiterhin ist ein Element zur Befestigung 1 des Schwimmer-Gehäuses 4 im Boden- beziehungsweise Uferbereich des Schwimmteiches 12 vorgesehen, wobei dieses Befestigungselement 1 im Boden beziehungsweise Ufer 8 verankerbar ist.

Das Befestigungselement ist aus einem das Schwimmer-Gehäuse 4 und den Schwimmer 5 zumindest teilweise umgebenden Aufnahmeteil 1 gebildet. Dieses Aufnahmeteil 1 ermöglicht bei relativ geringem Gewicht eine sichere Verankerung, wobei sich auch eine relativ geringe Einbautiefe innerhalb des Teichbodens ergibt, so dass die Dichtfolie 7 nicht wesentlich tiefer als an den übrigen Stellen verlegt werden muss. Die Verankerung kann auch auf verschiedene andere Arten, so etwa durch in den Boden versenkte Ankerklötze, z.B. aus Beton, erfolgen, an denen das Schwimmer-Gehäuse fixiert werden kann.

Schwimmer-Gehäuse und Schwimmer können auf diese Weise ohne den Schwimmbetrieb weiter zu stören, angebracht werden, wobei aufgrund der völligen Einbettung des Aufnahmeteils in den Boden trotz der erfindungsgemäßen Vorrichtung ein optisch attraktiver Uferbereich gestaltet werden kann.

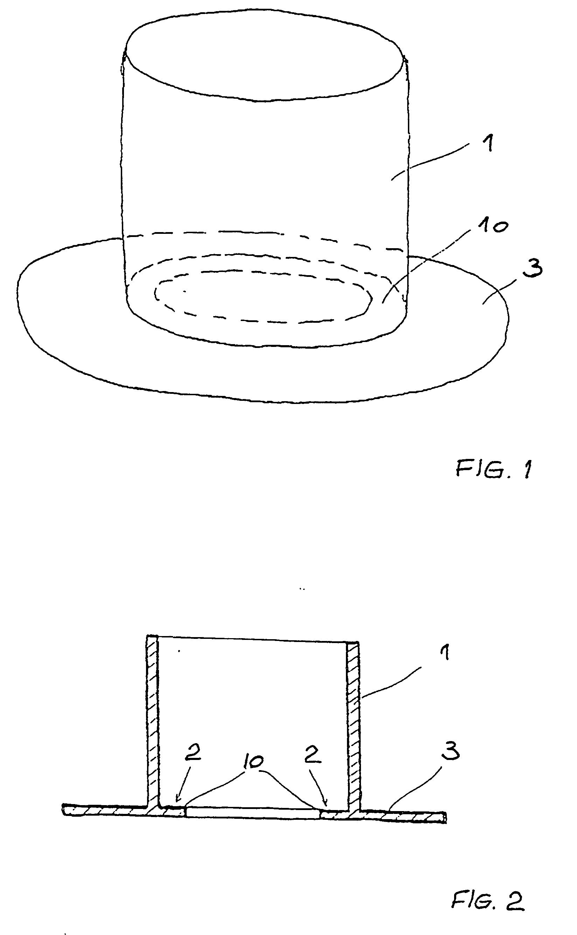

In Fig. 1 und 2 ist dazu das Aufnahmeteil 1 getrennt von der erfindungsgemäßen Vorrichtung abgebildet. Es weist eine Klebefläche 2 auf, mit der eine entsprechende Fläche des Schwimmer-Gehäuses 4 verklebbar ist, wobei die Klebefläche 2 - in Gebrauchslage gesehen - im Bereich der Unterseite des Aufnahmeteils 1 horizontal verlaufend angeordnet ist.

Das Aufnahmeteil ist in Form eines Hohlzylinders 1 ausgebildet, dessen Innendurchmesser größer als der Außendurchmesser des Schwimmers 5 ist, so dass dieser, wie in Fig. 3 ersichtlich, frei gegenüber dem Aufnahmeteil 1 beweglich ist. Zur Verankerung des Aufnahmeteils im Boden beziehungsweise Ufer 8 ist - in Gebrauchslage gesehen - im Bereich der Unterseite des Hohlzylinders 1 ein nach außen vorstehender flanschartiger Ansatz 3 angeformt. Dadurch kann der Befestigungszylinder 1 mit Untergrundmaterial, z.B. Steine, Schotter, Kies o.ä. sehr gut im Boden eingebettet werden. Bevorzugt wird die erfindungsgemäße Vorrichtung so angebracht, dass sie von außen gesehen sehr gut abgedeckt ist und vollkommen unauffällig wirkt. Dies kann beispielsweise durch vollständige Abdeckung des Aufnahmeteils 1 mit Schotter oder Kies bis knapp unterhalb des oberen Randes des Aufnahmeteils 1 geschehen, wie dies in Fig. 3 dargestellt ist. Dabei ist genügend Raum unterhalb des Aufnahmeteils 1 für das in das Schwimmer-Gehäuse 4 eintretende Absaugrohr 6 freigelassen. Sobald das Aufnahmeteil 1 im Boden beziehungsweise Ufer 8 des Gewässers 12 verankert ist, kann das Schwimmer-Gehäuse 4 in dieses eingesetzt und vorzugsweise mit dem Aufnahmeteil 1 verklebt werden. Die entsprechenden Klebestellen 20 halten das Schwimmer-Gehäuse 4 in seiner Lage fest.

Die Klebefläche 2 ist dabei auf einem, in den Innenraum des Hohlzylinders 1 ragenden konzentrischen, ringkreisförmigen Ansatz 10 (Fig. 1, 2) ausgebildet, der im gezeigten Ausführungsbeispiel fluchtend mit dem flanschartigen Ansatz 3 verläuft. Das Schwimmer-Gehäuse 4 kann beispielsweise mit einem PVC-Kleber auf die Klebefläche 2 des Ansatzes 10 geklebt werden, der auch unter Wasser volle Klebkraft beibehält.

## Patentansprüche

1. Vorrichtung zur Oberflächenabsaugung des Flüssigkeitsspiegels einer Schwimmanlage, insbesondere eines Schwimmteichs,
- mit einem Schwimmer (5) und einem Schwimmer-Gehäuse (4), gegenüber welchem der Schwimmer (5) vertikal verschiebbar ist und in das eine Saugleitung einmündet,
- mit einem Element zur Befestigung (1) des Schwimmer-Gehäuses (4) im Boden- beziehungsweise Uferbereich der Schwimmanlage, wobei dieses Element (1) im Boden beziehungsweise Ufer (8) der Schwimmanlage (12) verankerbar ist,
- wobei das Befestigungselement,das in Form eines Hohlzylinders (1) ausgebildet ist, das Schwimmer-Gehäuse (4) zumindest teilweise umgibt,
- **dadurch gekennzeichnet, dass**
- der Innendurchmesser des als Hohlzylinder ausgebildeten Aufnahmeteils (1) größer als der Außendurchmesser des Schwimmers (5) ist, so dass der Hohl zylinder (1) auch den Schwimmer (5) umgibt, und dass,
- in Gebrauchslage gesehen, im Bereich der Unterseite dieses Hohlzylinders (1) ein nach außen vorstehender flanschartiger Ansatz (3) zur Verankerung im Bodenbeziehungsweise Uferbereich (8) angeformt ist.

2. Vorrichtung nach Anspruch 1,
- **dadurch gekennzeichnet, dass**
- das Aufnahmeteil (1) zumindest eine Klebefläche (2) aufweist, mit der eine entsprechende fläche des Schwimmer-Gehäuses (4) verklebbar ist.

3. Vorrichtung nach Anspruch 1 oder 2,
- **dadurch gekennzeichnet, dass**
- die Klebefläche (2) - in Gebrauchslage gesehen - im Bereich der unteren Innenseite des Aufnahmeteils (1) horizontal verlaufend angeordnet ist.

4. Vorrichtung nach Anspruch 2,
- **dadurch gekennzeichnet, dass**
- die Klebefläche (2) auf einem, in den Innenraum des Hohlzylinders (1) ragenden konzentrischen, ringkreisförmigen Ansatz (10) ausgebildet ist, der vorzugsweise fluchtend mit dem flanschartigen Ansatz (3) verläuft.

## Claims

1. Device for the suction removal of the surface of an area of liquid of a swimming facility, in particular a swimming pool,
- with a float (5) and with a float housing (4), with respect to which the float (5) can be displaced vertically and into which a suction line issues,
- with an element (1) for fastening the float housing (4) in the bottom region or bank region of the swimming facility, this element (1) being anchorable in the bottom or bank (8) of the swimming facility (12),
- the fastening element, which is designed in the form of a hollow cylinder (1), surrounding the float housing (4) at least partially,
**characterized in that**
- the inside diameter of the reception part (1) designed as a hollow cylinder is larger than the outside diameter of the float (5), so that the hollow cylinder (1) also surrounds the float (5), and **in that**,
- as seen in the position of use, an outwardly projecting flange-like extension (3) for anchoring in the bottom region or bank region (8) is integrally formed in the region of the underside of this hollow cylinder (1).

2. Device according to Claim 1, **characterized in that**
- the reception part (1) has at least one adhesive surface (2), with which a corresponding surface of the float housing (4) can be adhesively bonded.

3. Device according to Claim 1 or 2, **characterized in that**
- as seen in the position of use, the adhesive surface (2) is arranged so as to run horizontally in the region of the lower inside of the reception part (1).

4. Device according to Claim 2, **characterized in that**
- the adhesive surface (2) is formed on a concentric annular extension (10) which projects into the interior of the hollow cylinder (1) and which runs preferably in alignment with the flange-like extension (3).

## Revendications

1. Dispositif pour aspirer la surface d'un bassin, en particulier d'un étang destiné à la baignade, pourvu d'un flotteur (5) et d'un boîtier de flotteur (4), par rapport auquel le flotteur (5) est positionné de façon à pouvoir se déplacer à la verticale, et dans lequel débouche une conduite d'aspiration (6), avec un élément de fixation (1) du boîtier de flotteur (4) dans le fond du bassin (12), ou selon les cas quelque part dans la berge (8), cet élément de fixation (1) pouvant être ancré dans le fond du bassin (12), ou encore dans la berge (8), l'élément de fixation se présentant sous la forme d'un cylindre creux (1) entourant le boîtier de flotteur (4) au moins pour partie, **caractérisé en ce que** le diamètre intérieur de l'élément servant de logement conçu sous la forme d'un cylindre creux (1) est supérieur au diamètre extérieur du flotteur (5), de sorte que le cylindre creux (1) entoure également le flotteur 5 et **en ce que**, considéré en situation d'utilisation, un épaulement de type collerette (3) dépassant vers l'extérieur est prévu dans la zone de la face inférieure de ce cylindre creux (1) pour l'ancrage dans la zone du fond ou encore de la berge (8).

2. Dispositif selon la revendication 1, **caractérisé en ce que** l'élément servant de logement (1) comprend au moins une surface de collage (2) contre laquelle peut être collée une surface correspondante du boîtier de flotteur (4).

3. Dispositif selon la revendication 1 ou 2, **caractérisé en ce que** la surface de collage (2) - considérée en situation d'utilisation - est disposée de façon à s'étendre sur le plan horizontal dans la zone de la face intérieure inférieure de l'élément servant de logement (1).

4. Dispositif selon la revendication 2, **caractérisé en ce que** la surface de collage (2) est prévue sur un épaulement circulaire (10), concentrique, saillant à l'intérieur du cylindre creux (1), qui, de préférence, s'étend sur un plan aligné avec celui de l'épaulement de type collerette (3).
